# FASCICULE DE BREVET EUROPEEN

(11) **EP 1 659 267 B1**
(45) Date de publication et mention de la délivrance du brevet: **21.03.2007**
(21) Numéro de dépôt: 05292379.4
(22) Date de dépôt: 09.11.2005
(51) Int. Cl.: F01D 25/18, G01N 15/06, G01N 33/28

(54) **Turbomachines à dispositif de détection automatique de particules ferromagnétiques dans une enceinte à huile**
Strömungsmaschine mit einer Vorrichtung zur automatischen Feststellung von Ferromagnetischen Teilchen in einem Öltank
Turbomachine with means for detecting automatically ferromagnetic particles in an oil tank

(30) Priorité: 16.11.2004 FR 0412115
(43) Date de publication de la demande: 24.05.2006
(73) Titulaire: SNECMA, 75015 Paris (FR)
(72) Inventeur: Bouiller, Philippe, 77210 Samoreau (FR); Rousselin, Stéphane, 77850 Hericy (FR)
(74) Mandataire: Boura, Olivier

(56) Documents cités:
- EP-A- 1 164 022
- WO-A-01/36966
- US-A- 5 264 832
- US-A- 5 614 830
- US-A- 5 696 331

## Description

### Arrière-plan de l'invention

La présente invention se rapporte au domaine général des turbomachines munies de dispositifs de détection automatique de particules ferromagnétiques dans une enceinte à huile; une telle turbomachine est connue de US-5264832, par exemple. Elle vise plus particulièrement une turbomachine aéronautique dont le générateur électrique est formé d'un induit solidaire de l'un de ses stators et d'un inducteur solidaire en rotation de l'un de ses rotors.

Dans le domaine des turbomachines aéronautiques, les servitudes (par exemple les vérins) sont généralement pour la plupart hydrauliques. Pour des raisons de fiabilité, de sécurité et d'encombrement, il est devenu de plus en plus fréquent, de remplacer ces servitudes hydrauliques par des servitudes électriques.

Dans ce but, il est devenu nécessaire d'implanter dans une turbomachine à servitudes électriques un générateur de courant électrique. Un tel générateur permet à la fois d'alimenter en courant électrique les différents équipements électriques de la turbomachine (pompes, vérins, etc.) et de réaliser le démarrage de la turbomachine.

De façon à profiter des bras (ou entretoises) du carter de la turbomachine pour le passage des câbles électriques, la solution généralement choisie est d'installer un tel générateur de courant électrique dans l'une des enceintes à huile du corps haute-pression de la turbomachine. Une telle enceinte à huile est destinée à assurer le refroidissement et la lubrification des roulements des différents paliers inter-arbres. Typiquement, le générateur de courant électrique se compose d'une bobine (formant l'induit) et d'aimants (formant l'inducteur) solidaires respectivement du stator et du rotor de la turbine haute-pression de la turbomachine.

Par ailleurs, il est également connu d'équiper les enceintes à huile de turbomachine de détecteurs de l'usure des roulements des paliers inter-arbres présents dans ces enceintes. De tels capteurs se présentent généralement sous la forme de bouchons magnétiques extérieurs. Ces bouchons comportent des aimants qui captent à l'intérieur de l'enceinte à huile les particules ferromagnétiques provenant de l'usure des roulements. Pendant les opérations de maintenance au sol de la turbomachine, les bouchons magnétiques sont démontés de la turbomachine et une analyse spectrographique permet de connaître l'origine et la quantité des particules recueillies afin d'en déduire l'état d'usure des paliers à roulement.

Lorsque la turbomachine est équipée d'un générateur de courant électrique tel que décrit précédemment, se pose le problème de la détection de l'usure des paliers à roulement. En effet, la présence d'aimants formant l'inducteur du générateur de courant électrique à l'intérieur d'une enceinte à huile a pour conséquence de fausser la détection de l'usure des paliers par l'intermédiaire des bouchons magnétiques.

De manière plus générale, la détection de l'usure des paliers à roulement par les bouchons magnétiques se révèle être une opération fastidieuse et incomplète. Outre le fait qu'une analyse spectrographique est nécessaire, la lecture des bouchons magnétiques ne peut être réalisée que ponctuellement (uniquement pendant les phases de maintenance au sol de la turbomachine). Il en résulte que le niveau d'usure des paliers à roulement est parfois détecté tardivement, ce qui peut compromettre la sécurité de la turbomachine.

### Objet et résumé de l'invention

La présente invention a donc pour but principal de pallier de tels inconvénients en proposant une turbomachine dont la détection de l'usure des paliers à roulement n'est pas compromise par la présence d'un générateur de courant électrique.

A cet effet, il est prévu une turbomachine comportant un rotor annulaire centré sur l'axe longitudinal de la turbomachine, un stator annulaire disposé de façon coaxiale autour du rotor, au moins un palier à roulements disposé sur le rotor et supportant en rotation ledit stator, l'intérieur du rotor définissant en partie une enceinte à huile destinée au refroidissement et à la lubrification des roulements du palier, et un générateur de courant électrique dont l'induit est solidaire du stator et l'inducteur est solidaire en rotation du rotor, comportant en outre un dispositif de détection automatique de particules ferromagnétiques dans l'enceinte à huile, caractérisé en ce que ledit dispositif de détection est alimenté en courant électrique par induction électromagnétique.

Selon une caractéristique particulière de l'invention, le dispositif de détection comporte une paire d'électrodes disposées sur la face annulaire interne du rotor, chaque électrode comportant un film métallique et une pluralité de pistes métalliques sensiblement parallèles, les pistes de l'une des électrodes étant imbriquées avec les pistes de l'autre électrode, un induit solidaire du rotor qui est excité par le champ magnétique créé par l'induit du générateur de courant électrique de la turbomachine afin d'appliquer une tension entre les électrodes, de sorte que, lorsque des particules ferromagnétiques viennent se loger entre les pistes des électrodes, un signal électrique est engendré entre lesdites électrodes, et un détecteur pour détecter l'intensité du signal électrique engendré entre les électrodes, l'intensité dudit signal électrique étant fonction de la densité de particules ferromagnétiques présentes dans l'enceinte à huile.

De la sorte, on utilise la présence de l'inducteur du générateur de courant électrique pour attirer par magnétisme les particules ferromagnétiques provenant de l'usure des roulements du palier sur les pistes métalliques du dispositif de détection. Une détection précise de l'usure du palier à roulement peut donc être obtenue.

Par ailleurs, un tel dispositif de détection de l'usure des paliers à roulement présente l'avantage d'être autonome en alimentation puisqu'il est alimenté en courant électrique par simple induction électromagnétique. L'induit du dispositif de détection peut ainsi être constitué d'une simple bobine de fil conducteur.

Selon une autre caractéristique particulière de l'invention, le dispositif de détection comporte en outre un émetteur radio relié au détecteur afin d'émettre vers un calculateur électronique pleine autorité (FADEC) de la turbomachine un signal radio qui est fonction de la densité de particules ferromagnétiques présentes dans l'enceinte à huile.

L'émetteur radio transmet en continu et en temps réel au FADEC le signal fonction de la densité de particules ferromagnétiques présentes dans l'enceinte à huile. Ainsi, le FADEC est informé en permanence du niveau réel d'usure des paliers à roulement. Aucune opération de contrôle au sol n'est alors nécessaire.

Le film métallique de chaque électrode du dispositif de détection peut s'étendre sensiblement selon l'axe longitudinal de la turbomachine et les pistes métalliques de chaque électrode peuvent s'étendre selon une direction sensiblement transversale par rapport audit axe longitudinal de la turbomachine.

Alternativement, les pistes métalliques de chaque électrode du dispositif de détection peuvent s'étendre sensiblement selon l'axe longitudinal de la turbomachine et le film métallique de chaque électrode peut s'étendre selon une direction sensiblement transversale par rapport audit axe longitudinal de la turbomachine.

L'induit du générateur de courant électrique est de préférence constitué d'une bobine de fil conducteur enroulée sur une face annulaire interne du stator et l'inducteur du générateur de courant électrique d'au moins un aimant disposé sur une face annulaire externe du rotor.

Dans ce cas, la bobine et le ou les aimants du générateur de courant électrique sont avantageusement isolés de l'enceinte à huile par des dispositifs annulaires d'étanchéité fixés sur le stator.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle en coupe longitudinale d'une turbomachine selon l'invention ;
- les figures 2 et 3 sont des schémas illustrant deux modes de réalisation du dispositif de détection de la turbomachine de la figure 1 ; et
- la figure 4 est une courbe illustrant l'intensité du signal mesuré par le dispositif de détection en fonction de la densité de particules ferromagnétiques recueillies.

### Description détaillée d'un mode de réalisation

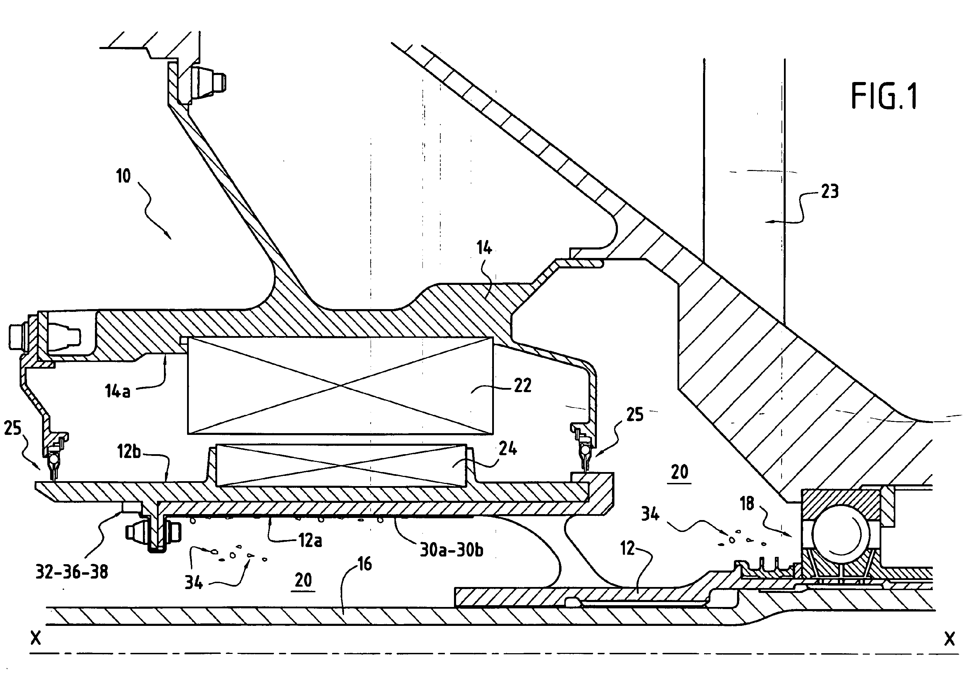

La figure 1 représente partiellement en coupe longitudinale une turbomachine aéronautique d'axe longitudinal X-X, et plus précisément le corps haute-pression 10 de celle-ci.

Le corps haute-pression 10 de la turbomachine se compose notamment d'un rotor annulaire 12 centré sur l'axe longitudinal X-X et d'un stator annulaire 14 disposé de façon coaxiale autour du rotor 12. Le rotor 12 est entraîné en rotation par un arbre 16 du corps basse-pression de la turbomachine coaxial au rotor. Un palier à roulements 18 est disposé sur le rotor 12 afin de supporter en rotation le stator 14.

De façon connue en soi, un circuit de circulation d'huile (non représenté) permet d'acheminer de l'huile vers le palier à roulements 18 afin de lubrifier et refroidir les roulements de ce dernier. L'huile ayant lubrifié et refroidi les roulements du palier 18 est alors confinée dans une enceinte à huile 20 en partie délimitée radialement par le rotor 12.

La turbomachine comporte en outre un générateur de courant électrique destiné à alimenter en courant électrique les différents équipements électriques de celle-ci (pompes, vérins, etc.) et à réaliser le démarrage de la turbomachine.

Le générateur de courant électrique fonctionne sur le principe de l'induction électromagnétique. Il se compose d'un induit solidaire du stator 14 et d'un inducteur solidaire en rotation du rotor 12. Par exemple, l'induit peut être réalisé par une bobine 22 de fil conducteur enroulé sur la face interne 14a du stator 14. Quant à l'inducteur, il peut être formé par un ou plusieurs aimants 24 montés sur la face externe 12b du rotor 12.

Lors du fonctionnement de la turbomachine, la rotation du rotor 12 entraîne celle du ou des aimants 24 du générateur de courant électrique à l'intérieur de la bobine 22 qui est fixe. Il en résulte l'apparition d'un courant induit dans le fil conducteur de la bobine 22 qui est acheminé vers les différents équipements de la turbomachine par l'intermédiaire de câbles électriques (non représentés) traversant un bras (ou entretoise) 23 du corps haute-pression.

Sur la figure 1, on notera que la bobine 22 et le ou les aimants 24 du générateur de courant électrique de la turbomachine sont isolés de l'enceinte à huile 20 par l'intermédiaire de dispositifs annulaires d'étanchéité 25 de type joints à lèvres qui sont fixés sur le stator 14.

Une telle turbomachine comporte en outre un dispositif de détection automatique de particules ferromagnétiques dans l'enceinte à huile 20, ce dispositif de détection étant alimenté en courant électrique par induction électromagnétique.

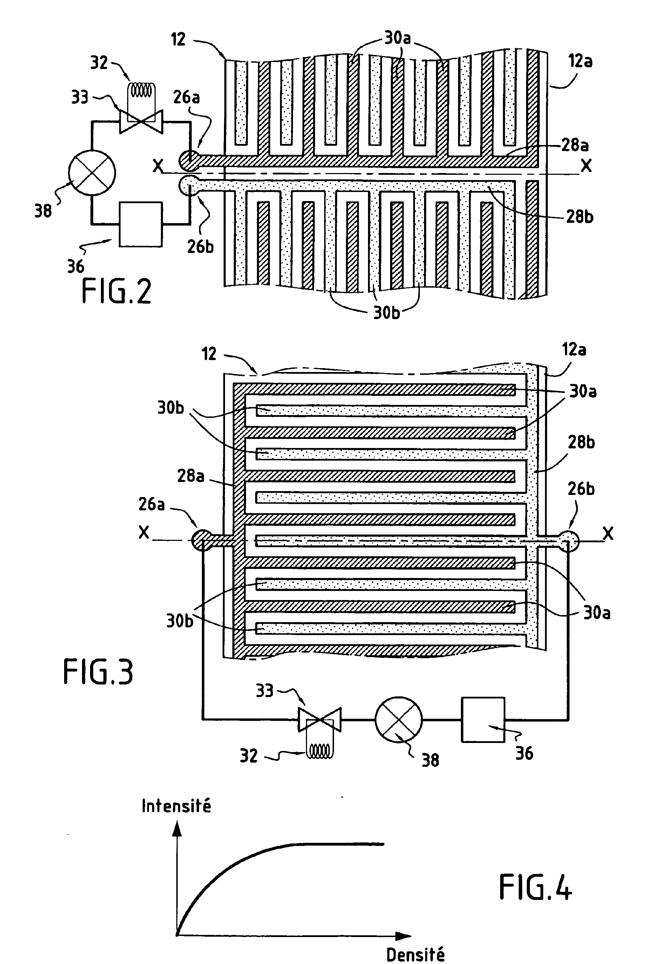

Plus précisément, comme illustré sur les figures 2 et 3, le dispositif de détection se compose d'une paire d'électrodes 26a, 26b disposées sur la face annulaire interne 12a du rotor 12.

Chaque électrode 26a, 26b comporte un film métallique 28a, 28b respectif et une pluralité de pistes métalliques 30a, 30b sensiblement parallèles, les pistes de l'une des électrodes étant imbriquées avec les pistes de l'autre électrode. Ainsi, les électrodes 26a, 26b présentent chacune une forme de peigne.

Les pistes 30a, 30b des électrodes sont réparties sur la face interne 12a du rotor 12 de façon à couvrir la plus grande surface possible. Le métal formant les films 28a, 28b et les pistes 30a, 30b peut être du cuivre par exemple.

Comme représenté sur la figure 2, le film métallique 28a, 28b de chaque électrode 26a, 26b du dispositif de détection peut s'étendre sensiblement selon l'axe longitudinal X-X de la turbomachine et les pistes métalliques 30a, 30b peuvent s'étendre selon une direction sensiblement transversale par rapport à cet axe X-X.

Alternativement, les pistes métalliques 30a, 30b de chaque électrode 26a, 26b du dispositif de détection peuvent s'étendre sensiblement selon l'axe longitudinal X-X et le film métallique 28a, 28b peut s'étendre selon une direction sensiblement transversale par rapport à cet axe X-X (figure 3).

Une bobine 32 de fil conducteur formant induit et qui est solidaire du rotor 12 est reliée aux électrodes 26a, 26b du dispositif de détection. Elle est enroulée sur la face interne 12a du rotor 12. Cette bobine 32, qui est excitée par le champ magnétique créé par la bobine 22 du générateur de courant électrique de la turbomachine, permet d'appliquer une tension entre les électrodes 26a, 26b.

Ainsi, le dispositif de détection présente une alimentation autonome. En effet, lors du fonctionnement de la turbomachine, la rotation du rotor 12 entraîne celle de la bobine 32 du dispositif de détection par rapport à la bobine 22 du générateur de courant électrique qui est fixe. Il en résulte l'apparition d'un courant induit dans le fil conducteur de la bobine 32 qui applique une tension entre les électrodes 26a, 26b par l'intermédiaire d'un redresseur 33.

Selon une variante non représentée d'alimentation des électrodes 26a, 26b du dispositif de détection, il peut être envisageable d'installer un ou plusieurs aimants formant inducteur sur la face interne 14a du stator 14 en regard de la bobine 32. Ainsi, lors du fonctionnement de la turbomachine, la rotation du rotor 12 entraîne celle de la bobine 32 du dispositif de détection par rapport à ces aimants qui sont fixes, engendrant ainsi l'apparition d'un courant induit dans la bobine du dispositif de détection.

La présence d'un ou plusieurs aimants 24 du générateur de courant électrique sur la face externe 12b du rotor 12 a pour effet d'attirer par magnétisme sur la face interne 12a de celui-ci les particules ferromagnétiques 34 présentes dans l'huile de l'enceinte 20. De telles particules 34 résultent de l'usure des roulements du palier 18 (notamment par écaillage).

Lorsque ces particules ferromagnétiques 34 sont attirées sur la face interne 12a du rotor 12, elles viennent se loger entre les pistes 30a, 30b des électrodes 26a, 26b du dispositif de détection, fermant ainsi le circuit. Un signal électrique est alors engendré entre les électrodes 26a, 26b.

En d'autres termes, le dispositif de détection fonctionne comme un interrupteur : dès que des particules ferromagnétiques 34 viennent se loger entre les pistes 30a, 30b de celui-ci, le contact est fermé et un signal électrique engendré.

Un détecteur 36 relié aux électrodes 26a, 26b permet de détecter et de mesurer l'intensité du signal électrique engendré entre ces électrodes. L'intensité du signal électrique détecté est fonction de la densité de particules ferromagnétiques 34 en contact avec les pistes 30a, 30b du dispositif de détection, c'est-à-dire de la densité de particules présentes dans l'enceinte à huile 20.

La figure 4 montre une courbe représentant l'évolution de l'intensité du signal électrique détecté (en ordonnée) par rapport à la densité de particules ferromagnétiques en contact avec les pistes du dispositif de détection (en abscisse). Sur cette courbe, on remarque bien que l'intensité du signal électrique augmente avec la densité de particules jusqu'à atteindre un plafond.

Selon une caractéristique avantageuse de l'invention, le dispositif de détection comporte en outre un émetteur radio 38 qui est relié au détecteur 36. Cet émetteur 38 permet d'émettre vers un calculateur électronique pleine autorité de la turbomachine appelé FADEC (non représenté sur les figures) un signal radio qui est fonction de la densité de particules ferromagnétiques 34 présentes dans l'enceinte à huile 20.

Ainsi, le FADEC est informé en permanence et en temps réel de la densité de particules ferromagnétiques 34 présentes dans l'enceinte à huile 20, et donc de l'état d'usure des roulements du palier 18 (à une densité importante de particules correspond une usure importante des roulements).

De la sorte, il n'est plus nécessaire d'attendre les phases de maintenance au sol de la turbomachine pour connaître l'état d'usure des roulements du palier inter-arbres. Par exemple, en cas de seuil critique d'usure des roulements du palier, le FADEC peut informer le pilote de l'avion de la nécessité d'effectuer, lors du prochain arrêt de l'avion, une maintenance sur ces derniers.

## Revendications

1. Turbomachine d'axe longitudinal (X-X), comportant un rotor annulaire (12) centré sur l'axe longitudinal de la turbomachine, un stator annulaire (14) disposé de façon coaxiale autour du rotor, au moins un palier à roulements (18) disposé sur le rotor (12) et supportant en rotation ledit stator (14), l'intérieur du rotor définissant en partie une enceinte à huile (20) destinée au refroidissement et à la lubrification des roulements du palier (18), et un générateur de courant électrique dont l'induit (22) est solidaire du stator (14) et l'inducteur (24) est solidaire en rotation du rotor (12), comportant en outre un dispositif de détection automatique de particules ferromagnétiques dans l'enceinte à huile (20), **caractérisé en ce que** ledit dispositif de détection est alimenté en courant électrique par induction électromagnétique.

2. Turbomachine selon la revendication 1, **caractérisée en ce que** le dispositif de détection comporte :
une paire d'électrodes (26a, 26b) disposées sur la face annulaire interne (12a) du rotor (12), chaque électrode (26a, 26b) comportant un film métallique (28a, 28b) et une pluralité de pistes métalliques (30a, 30b) sensiblement parallèles, les pistes (30a, 30b) de l'une des électrodes (26a, 26b) étant imbriquées avec les pistes de l'autre électrode ;
un induit (32) solidaire du rotor (12) qui est excité par le champ magnétique créé par l'induit (22) du générateur de courant électrique de la turbomachine afin d'appliquer une tension entre les électrodes, de sorte que, lorsque des particules ferromagnétiques (34) viennent se loger entre - les pistes (30a, 30b) des électrodes (26a, 26b), un signal électrique est engendré entre lesdites électrodes ; et
un détecteur (36) pour détecter l'intensité du signal électrique engendré entre les électrodes (26a, 26b), l'intensité dudit signal électrique étant fonction de la densité de particules ferromagnétiques (34) présentes dans l'enceinte à huile (20).

3. Turbomachine selon la revendication 2, **caractérisée en ce que** le dispositif de détection comporte en outre un émetteur radio (38) relié au détecteur (36) afin d'émettre vers un calculateur électronique pleine autorité (FADEC) de la turbomachine un signal radio qui est fonction de la densité de particules ferromagnétiques (34) présentes dans l'enceinte à huile (20).

4. Turbomachine selon l'une des revendications 2 et 3, **caractérisée en ce que** l'induit du dispositif de détection est constitué d'une bobiné de fil conducteur (32).

5. Turbomachine selon l'une quelconque des revendications 1 à 4, **caractérisée en ce que** le film métallique (28a, 28b) de chaque électrode (26a, 26b) du dispositif de détection s'étend sensiblement selon l'axe longitudinal (X-X) de la turbomachine et les pistes métalliques (30a, 30b) de chaque électrode s'étendent selon une direction sensiblement transversale par rapport audit axe longitudinal (X-X) de la turbomachine.

6. Turbomachine selon l'une quelconque des revendications 1 à 4, **caractérisée en ce que** les pistes métalliques (30a, 30b) de chaque électrode -(26a, 26b) du dispositif de détection s'étendent sensiblement selon l'axe longitudinal (X-X) de la turbomachine et le film métallique (28a, 28b) de chaque électrode s'étend selon une direction sensiblement transversale par rapport audit axe longitudinal (X-X) de la turbomachine.

7. Turbomachine selon l'une quelconque des revendications 1 à 6, **caractérisée en ce que** l'induit du générateur de courant électrique est constitué d'une bobine (22) enroulée sur une face annulaire interne (14a) du stator (14) et l'inducteur du générateur de courant électrique est constitué d'au moins un aimant (24) disposé sur une face annulaire externe (12b) du rotor (12).

8. Turbomachine selon la revendication 7, **caractérisée en ce que** la bobine (22) et le ou les aimants (24) du générateur de courant électrique sont isolés de l'enceinte à huile (20) par des dispositifs annulaires d'étanchéité (25) fixés sur le stator (14).

9. Turbomachine selon l'une quelconque des revendications 1 à 8, **caractérisée en ce que** le rotor (12) et le stator (14) appartiennent au corps haute-pression de la turbomachine.

## Claims

1. A turbomachine having a longitudinal axis (X-X), the turbomachine comprising an annular rotor (12) centred on the longitudinal axis of the turbomachine, an annular stator (14) disposed coaxially around the rotor, at least one ball bearing (18) disposed on the rotor (12) and rotatably supporting said stator (14), the inside of the rotor defining part of an oil enclosure (20) for cooling and lubricating the balls of the bearing (18), and an electricity generator having a secondary magnetic circuit (22) secured to the stator (14) and a primary magnetic circuit (24) constrained to rotate with the rotor (12), the turbomachine further including a detector device for automatically detecting ferromagnetic particles in the oil enclosure (20) and **characterised in that** said detector device is powered electrically by electromagnetic induction.

2. A turbomachine according to claim 1, **characterised in that** the detector device comprises:
a pair of electrodes (26a, 26b) disposed on the inside annular face (12a) of the rotor (12), each electrode (26a, 26b) comprising a metal film (28a, 28b) and a plurality of substantially parallel metal tracks (30a, 30b), the tracks (30a, 30b) of one of the electrodes (26a, 26b) being interleaved with the tracks of the other electrode;
a secondary magnetic circuit (32) secured to the rotor (12) which is excited by the magnetic field created by the secondary magnetic circuit (22) of the electricity generator of the turbomachine so as to apply a voltage between the electrodes such that when ferromagnetic particles (34) are received between the tracks (30a, 30b) of the electrodes (26a, 26b), an electrical signal is generated between said electrodes; and
a detector (36) for detecting the intensity of the electrical signal generated between the electrodes (26a, 26b), the intensity of said electrical signal being a function of the density of ferromagnetic particles (34) present in the oil enclosure.

3. A turbomachine according to claim 2, **characterised in that** the detector device further includes a radio transmitter (38) connected to the detector (36) in order to transmit a radio signal to a full authority digital engine controller (FADEC) of the turbomachine, which signal is a function of the density of ferromagnetic particles (34) present in the oil enclosure (20).

4. A turbomachine according to claim 2 or claim 3, **characterised in that** the secondary magnetic circuit of the detector device is constituted by a coil of conductor wire (32).

5. A turbomachine according to any one of claims 1 to 4, **characterised in that** the metal film (28a, 28b) of each electrode (26a, 26b) of the detector device extends substantially along the longitudinal axis (X-X) of the turbomachine, and the metal tracks (30a, 30b) of each electrode extend in a direction that is substantially transverse relative to said longitudinal axis (X-X) of the turbomachine.

6. A turbomachine according to any one of claims 1 to 4, **characterised in that** the metal tracks (30a, 30b) of each electrode (26a, 26b) of the detector device extends substantially along the longitudinal axis (X-X) of the turbomachine, and the metal film (28a, 28b) of each electrode extends in a direction that is substantially transverse relative to said longitudinal axis (X-X) of the turbomachine.

7. A turbomachine according to any one of claims 1 to 6, **characterised in that** the secondary magnetic circuit of the electricity generator is constituted by a coil (22) wound on an inner annular face (14a) of the stator (14), and the primary magnetic circuit of the electricity generator is constituted by at least one magnet (24) disposed on an outer annular face (12b) of the rotor (12).

8. A turbomachine according to claim 7, **characterised in that** the coil (22) and the magnet(s) (24) of the electricity generator are isolated from the oil enclosure (20) by annular sealing devices (25) secured to the stator (14).

9. A turbomachine according to any one of claims 1 to 8, **characterised in that** the rotor (12) and the stator (14) belong to the highpressure body of the turbomachine.

## Patentansprüche

1. Turbomaschine mit Längsachse (X-X), die einen ringförmigen Rotor (12), der um die Längsachse der Turbomaschine angeordnet ist, einen ringförmigen Stator (14), der koaxial um den Rotor angeordnet ist, wenigstens ein Wälzlager (18), das an dem Rotor (12) angeordnet ist und den Stator (14) drehbar lagert, wobei der Innenraum des Rotors teilweise eine Ölkammer (20) zur Kühlung und zur Schmierung der Wälzkörper des Lagers (18) definiert, sowie einen Stromgenerator umfaßt, dessen Läufer (22) fest mit dem Stator (14) verbunden ist und dessen Ständer (24) drehfest mit dem Rotor (12) verbunden ist, und die ferner eine Vorrichtung zum automatischen Erfassen ferromagnetischer Teilchen in der Ölkammer (20) umfaßt, **dadurch gekennzeichnet, daß** die Erfassungsvorrichtung durch elektromagnetische Induktion mit Strom gespeist wird.

2. Turbomaschine nach Anspruch 1, **dadurch gekennzeichnet, daß** die Erfassungsvorrichtung folgendes umfaßt:
ein Paar Elektroden (26a, 26b), die an der ringförmigen Innenseite (12a) des Rotors (12) angeordnet sind, wobei jede Elektrode (26a, 26b) einen Metallfilm (28a, 28b) sowie eine Vielzahl von im wesentlichen parallelen Metallspuren (30a, 30b) umfaßt, wobei die Spuren (30a, 30b) einer der Elektroden (26a, 26b) sich mit den Spuren der anderen Elektrode überlappen;
einen mit dem Rotor (12) fest verbundenen Läufer (32), der durch das durch den Läufer (22) des Stromgenerators der Turbomaschine erzeugte Magnetfeld erregt wird, um zwischen den Elektroden eine Spannung anzulegen, so daß dann, wenn sich zwischen den Spuren (30a, 30b) der Elektroden (26a, 26b) ferromagnetische Teilchen festsetzen, ein elektrisches Signal zwischen den Elektroden erzeugt wird; und
einen Fühler (36), um die Stärke des zwischen den Elektroden (26a, 26b) erzeugten elektrischen Signals zu erfassen, wobei die Stärke des elektrischen Signals eine Funktion der Dichte von in der Ölkammer (20) vorhandenen ferromagnetischen Teilchen (34) ist.

3. Turbomaschine nach Anspruch 2, **dadurch gekennzeichnet, daß** die Erfassungsvorrichtung ferner einen mit dem Fühler (36) verbundenen Funksender (38) umfaßt, um an einen vollberechtigten elektronischen Rechner (FADEC) der Turbomaschine ein Funksignal zu senden, das eine Funktion der Dichte von in der Ölkammer (20) vorhandenen ferromagnetischen Teilchen (34) ist.

4. Turbomaschine nach einem der Ansprüche 2 und 3, **dadurch gekennzeichnet, daß** der Läufer der Erfassungsvorrichtung von einer Spule aus Leitungsdraht (32) gebildet ist.

5. Turbomaschine nach irgendeinem der Ansprüche 1 bis 4, **dadurch gekennzeichnet, daß** der Metallfilm (28a, 28b) jeder Elektrode (26a, 26b) der Erfassungsvorrichtung im wesentlichen entlang der Längsachse (X-X) der Turbomaschine verläuft und daß sich die Metallspuren (30a, 30b) jeder Elektrode entlang einer zur Längsachse (X-X) der Turbomaschine im wesentlichen querverlaufenden Richtung erstrecken.

6. Turbomaschine nach irgendeinem der Ansprüche 1 bis 4, **dadurch gekennzeichnet, daß** die Metallspuren (30a, 30b) jeder Elektrode (26a, 26b) der Erfassungsvorrichtung im wesentlichen entlang der Längsachse (X-X) der Turbomaschine verlaufen und daß sich der Metallfilm (28a, 28b) jeder Elektrode entlang einer zur Längsachse (X-X) der Turbomaschine im wesentlichen querverlaufenden Richtung erstreckt.

7. Turbomaschine nach irgendeinem der Ansprüche 1 bis 6, **dadurch gekennzeichnet, daß** der Läufer des Stromgenerators von einer Spule (22) gebildet ist, die auf eine ringförmige Innenseite (14a) des Stators (14) gewickelt ist, und der Ständer des Stromgenerators von wenigstens einem Magneten (24) gebildet ist, der an einer ringförmigen Außenseite (12b) des Rotors (12) angeordnet ist.

8. Turbomaschine nach Anspruch 7, **dadurch gekennzeichnet, daß** die Spule (22) und der oder die Magnet(en) (24) des Stromgenerators durch ringförmige, an dem Stator (14) befestigte Dichtungsvorrichtungen (25) von der Ölkammer (20) isoliert sind.

9. Turbomaschine nach irgendeinem der Ansprüche 1 bis 8, **dadurch gekennzeichnet, daß** der Rotor (12) und der Stator (14) zum Hochdruckkörper der Turbomaschine gehören.
